# EUROPEAN PATENT SPECIFICATION

(11) **EP 3 536 041 B1**
(45) Date of publication and mention of the grant of the patent: **03.03.2021**
(21) Application number: 17808584.1
(22) Date of filing: 03.11.2017
(51) Int. Cl.: H04W 48/12

(54) **SYSTEM AND METHOD FOR ENCODING SYSTEM INFORMATION FOR MULTIPLE CELLS AND BEAMS**
SYSTEM UND VERFAHREN ZUR CODIERUNG VON SYSTEMINFORMATIONEN FÜR MEHRERE ZELLEN UND STRAHLEN
SYSTÈME ET PROCÉDÉ DE CODAGE D'INFORMATIONS DE SYSTÈME POUR DE MULTIPLES CELLULES ET FAISCEAUX

(30) Priority: 04.11.2016 US 201662418162 P
(43) Date of publication of application: 11.09.2019
(73) Proprietor: Telefonaktiebolaget LM Ericsson (publ), 164 83 Stockholm (SE)
(72) Inventor: FRENGER, Pål, 583 34 Linköping (SE); PEISA, Janne, 02130 Espoo (FI); RUNE, Johan, 181 29 Lidingö (SE); SUSITAIVAL, Riikka, 00100 Helsinki (FI); WAGER, Stefan, 02360 Espoo (FI); WIEMANN, Henning, 52080 Aachen (DE)
(74) Representative: Ericsson
(86) International application number: PCT/IB2017/056886
(87) International publication number: WO 2018/083655

(56) References cited:
- US-A1- 2014 112 220
- US-A1- 2016 205 671
- CATT: "System Information Categories and Delivery Mechanisms", 3GPP DRAFT; R2-164808, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126517, Retrieved from the Internet: URL:http://www.3gpp.org/ftp/Meetings_3GPP_ SYNC/RAN2/Docs/ [retrieved on 2016-08-21]
- ERICSSON: "Index based provisioning of system information in NR", 3GPP DRAFT; R2-168286 - INDEX BASED PROVISIONING OF SYSTEM INFORMATION IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Reno, Nevada, USA; 20161114 - 20161118 5 November 2016 (2016-11-05), XP051192992, Retrieved from the Internet: URL:http://www.3gpp.org/ftp/tsg_ran/WG2_RL 2/TSGR2_96/Docs/ [retrieved on 2016-11-05]

## Description

### TECHNICAL FIELD

The present invention is directed, in general, to the communication systems and, more specifically, to a system and method for encoding system information from multiple cells and beams.

### BACKGROUND

In current wireless communication systems, existing formats for system information ("SI") encoding to encompass multiple beams generally results in repetition of many of the system information block ("SIB") parameters with identical values. Such processes result in unnecessarily large overhead, which is particularly undesirable in a system where a "lean design" is a loadstar to reduce energy consumption in the network.

Accordingly, what is needed in the art is a system and method for encoding system information for multiple beams that avoids the large overhead associated with current processes.

Non-patent literature "CATT, "System Information Categories and Delivery Mechanisms", vol. RAN WG2, no. Gothenburg, Sweden; 20160822 - 20160826, (20160821), 3GPP DRAFT; R2-164808, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL http://www.3gpp.org/ftp/Meetings_3GPP_SYNC/RAN2/Docs/, (20160821)" discloses techniques regarding SI categories and delivery mechanisms.

US 2014/112220 discloses methods and apparatus for transmission and reception of common channel information in a mobile communication system using multi-antenna-based beamforming. A number of beams to be used for transmission to a terminal is determined at a base station. The common channel information is generated corresponding to the number of beams. The common channel information is transmitted from the base station to the terminal through one of the beams.

### SUMMARY

The present invention is defined by the appended independent claims, to which reference should now be made. Specific embodiments are defined in the dependent claims. These and other problems are generally solved or circumvented, and technical advantages are generally achieved, by advantageous embodiments of the present invention for an apparatus, system and method for encoding system information from multiple cells and beams in a communication system. In one embodiment, the apparatus is operable in a communication system including a first beam and a second beam, and is configured to construct a system information block for the first beam. The system information block includes a common field having common system information associated with the first beam and the second beam, and a first beam specific field having first beam specific system information indexed to the first beam. The apparatus is also configured to transmit the system information block to a user equipment for access to the communication system.

The foregoing has outlined rather broadly the features and technical advantages of the present invention in order that the detailed description of the invention that follows may be better understood. Additional features and advantages of the invention will be described hereinafter, which form the subject of the claims of the invention. It should be appreciated by those skilled in the art that the conception and specific embodiment disclosed may be readily utilized as a basis for modifying or designing other structures or processes for carrying out the same purposes of the present invention.

### BRIEF DESCRIPTION OF THE DRAWINGS

For a more complete understanding of the present invention, reference is now made to the following descriptions taken in conjunction with the accompanying drawings, in which:
FIGUREs 1 to 3 illustrate diagrams of embodiments of a communication system, and portions thereof;
FIGURE 4 illustrates block diagrams of an embodiment of a system information distribution for a communication system;
FIGURE 5 illustrates a system level diagram of an embodiment of joint transmission of system information blocks in a multiple cell communication system;
FIGURE 6 illustrates a system level diagram of an embodiment of joint transmission of system information blocks in a multiple beam communication system;
FIGURE 7 illustrates a block diagram of an embodiment of a structure of system information in a communication system;
FIGURE 8 illustrates a system level diagram of an embodiment of a multiple beam communication system;
FIGUREs 9 and 10 illustrate block diagrams of embodiments of system information blocks;
FIGURE 11 illustrates a system level diagram of an embodiment of a multiple beam communication system;
FIGURE 12 illustrates a block diagram of an embodiment of a system information block;
FIGURE 13 illustrates a system level diagram of an embodiment of a multiple beam communication system;
FIGURE 14 illustrates a block diagram of an embodiment of a system information block; and
FIGUREs 15 and 16 illustrate flow diagrams of embodiments of methods of operating communication systems.

Corresponding numerals and symbols in the different figures generally refer to corresponding parts unless otherwise indicated, and may not be redescribed in the interest of brevity after the first instance. The FIGUREs are drawn to illustrate the relevant aspects of exemplary embodiments.

### DETAILED DESCRIPTION

The making and using of the present exemplary embodiments are discussed in detail below. It should be appreciated, however, that the embodiments provide many applicable inventive concepts that can be embodied in a wide variety of specific contexts. The specific embodiments discussed are merely illustrative of specific ways to make and use the systems, subsystems, and modules for encoding system information from multiple cells and beams in a communication system. While the principles will be described in the environment of a 3GPP Long Term Evolution ("LTE") or a New Radio ("NR") communication system, any environment such as a Wi-Fi wireless communication system is well within the broad scope of the present disclosure.

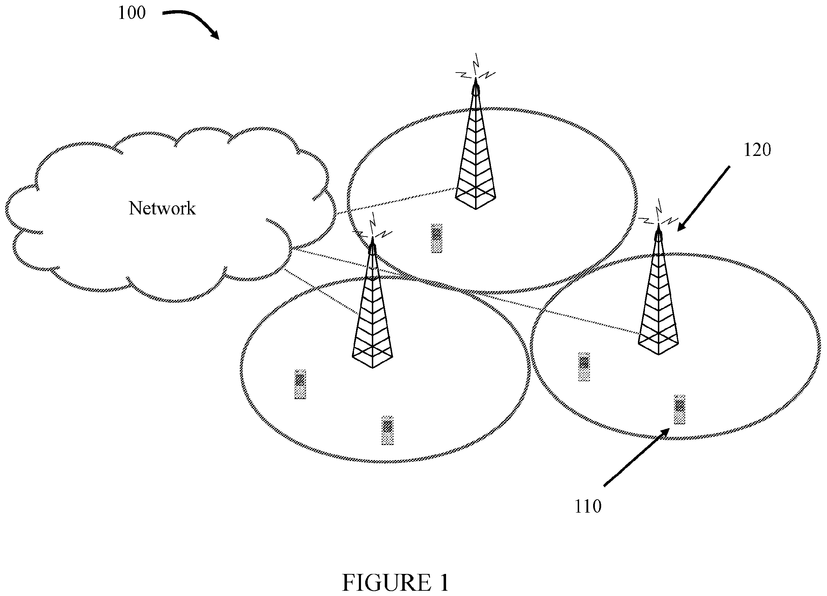

Referring initially to FIGUREs 1 to 3, illustrated are diagrams of embodiments of a communication system 100, and portions thereof. As shown in FIGURE 1, the communication system 100 includes one or more instances of wireless communication devices (one of which is designated 110, and also referred to as user equipment ("UE")).

The wireless communication device 110 may be any device that has an addressable interface (*e.g*., an Internet protocol ("IP") address, a Bluetooth identifier ("ID"), a near-field communication ("NFC") ID, *etc.*), a cell radio network temporary identifier ("C-RNTI"), and/or is intended for accessing services via an access network and configured to communicate over the access network via the addressable interface. For instance, the wireless communication device 110 may be, but is not limited to: mobile phone, smart phone, sensor device, meter, vehicle, household appliance, medical appliance, media player, camera, or any type of consumer electronic, for instance, but not limited to, television, radio, lighting arrangement, tablet computer, laptop, or PC. The wireless communication device 110 may be a portable, pocket-storable, hand-held, computer-comprised, or vehicle-mounted mobile device, enabled to communicate voice and/or data, via a wireless or wireline connection. A wireless communication device 110 may have functionality for performing monitoring, controlling, measuring, recording, *etc.*, that can be embedded in and/or controlled/monitored by a central processing unit ("CPU"), microprocessor, ASIC, or the like, and configured for connection to a network such as a local ad-hoc network or the Internet. A wireless communication device 110 may have a passive communication interface, such as a quick response (Q) code, a radiofrequency identification ("RFID") tag, an NFC tag, or the like, or an active communication interface, such as a modem, a transceiver, a transmitter-receiver, or the like.

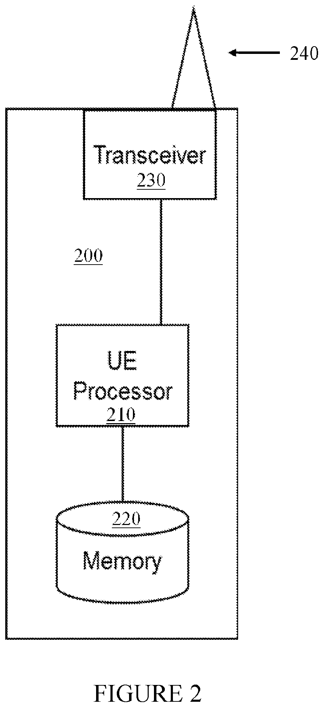

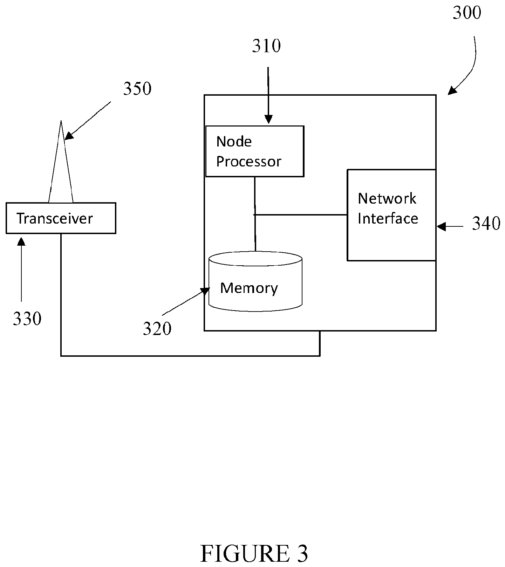

The communication system 100 also includes one or more radio access nodes (one of which is designated 120) such as eNodeBs, gNodeBs or other base stations capable of communicating with the wireless communication devices 110 along with any additional elements suitable to support communication between wireless communication devices 110 or between a wireless communication device 110 and another communication device (such as a landline telephone). Although the illustrated wireless communication devices 110 may represent communication devices that include any suitable combination of hardware and/or software, the wireless communication devices 110 may, in particular embodiments, represent devices such as the example wireless communication device 200 illustrated in greater detail by FIGURE 2. Similarly, although the illustrated radio access node 120 may represent network nodes that include any suitable combination of hardware and/or software, these nodes may, in particular embodiments, represent devices such as the example radio access node 300 illustrated in greater detail by FIGURE 3.

As shown in FIGURE 2, the example wireless communication device 200 includes a processor (or processing circuitry) 210, a memory 220, a transceiver 230, and antennas 240. In particular embodiments, some or all of the functionality described above as being provided by machine type communication ("MTC") and machine-to-machine ("M2M") devices, and/or any other types of wireless communication devices may be provided by the device processor executing instructions stored on a computer-readable medium, such as the memory shown in FIGURE 2. Alternative embodiments of the wireless communication device 200 may include additional components beyond those shown in FIGURE 2 that may be responsible for providing certain aspects of the device's functionality, including any of the functionality described above and/or any functionality necessary to support the solution described herein.

As shown in FIGURE 3, the example radio access node 300 includes a processor (or processing circuitry) 310, a memory 320, a transceiver 330, a network interface 340 and antennas 350. In particular embodiments, some or all of the functionality described herein may be provided by a base station, a node B, an enhanced node B, a base station controller, a radio network controller, a relay station and/or any other type of network node may be provided by the node processor executing instructions stored on a computer-readable medium, such as the memory shown in FIGURE 3. Alternative embodiments of the radio access node 300 may include additional components responsible for providing additional functionality, including any of the functionality identified above and/or any functionality necessary to support the solution described herein.

The processors, which may be implemented with one or a plurality of processing devices, performs functions associated with its operation including, without limitation, precoding of antenna gain/phase parameters, encoding and decoding of individual bits forming a communication message, formatting of information and overall control of a respective communication device. Exemplary functions related to management of communication resources include, without limitation, hardware installation, traffic management, performance data analysis, configuration management, security, billing and the like. The processors may be of any type suitable to the local application environment, and may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as non-limiting examples.

The memories may be one or more memories and of any type suitable to the local application environment, and may be implemented using any suitable volatile or nonvolatile data storage technology such as a semiconductor-based memory device, a magnetic memory device and system, an optical memory device and system, fixed memory and removable memory. The programs stored in the memories may include program instructions or computer program code that, when executed by an associated processor, enable the respective communication device to perform its intended tasks. Of course, the memories may form a data buffer for data transmitted to and from the same. Exemplary embodiments of the system, subsystems, and modules as described herein may be implemented, at least in part, by computer software executable by processors, or by hardware, or by combinations thereof.

The transceivers modulate information onto a carrier waveform for transmission by the respective communication device via the respective antenna(s) to another communication device. The respective transceiver demodulates information received via the antenna(s) for further processing by other communication devices. The transceiver is capable of supporting duplex operation for the respective communication device. The network interface performs similar functions as the transceiver communicating with a core network.

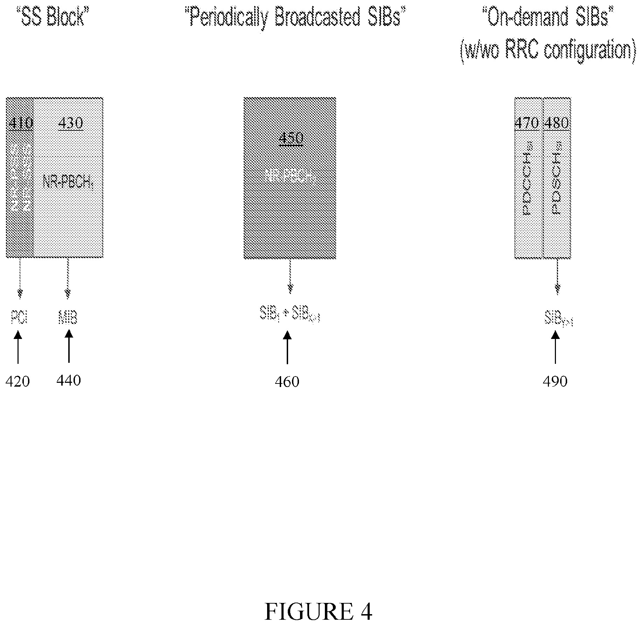

Turning now to FIGURE 4, illustrated are block diagrams of an embodiment of a system information distribution for a communication system (*e.g*., a Fifth Generation ("5G")-New Radio ("NR") communication system). A NR-primary synchronization signal/NR-secondary synchronization signal ("NR-PSS/NR-SSS", also referred to as "PSS/SSS") 410 defines a physical cell identity ("PCI") 420. A master information block ("MIB") 440 is transmitted together with the NR-PSS/NR-SSS 410 inside a first NR-physical broadcast channel (referred to as "NR-PBCH₁") 430. The PSS/SSS/NR-PBCH₁/MIB together may form a structure called synchronization signal ("SS") Block. The SS Block(s) may be transmitted in a number of beams, which together cover a cell area. The SS Block beam transmissions may be grouped into SS bursts and a number of SS bursts constitute a SS Burst Set. A SS Burst Set constitutes a beam sweep, *i.e.,* transmission of the SS Block beams covering the cell area. A SS Burst Set may consist of one or more SS Bursts, a SS Burst may consist of one or more SS Blocks/SS Block beams. In the simplest case, a SS Burst Set thus consists of a single beam, *e.g*., an omnidirectional beam or a sector beam covering the cell area. The PCI 410 defines the NR cell. In the case that a cell transmits the synchronization signals in different beams during different time slots, then the content of the MIB 440 may be different in each beam. Also, while in the present embodiment the MIB 440 is transmitted within the NR-PBCH₁ 430, portions of the MIB 440 may also be encoded in, for instance, scrambling of the physical broadcast channel ("PBCH") or demodulation reference signals of the PBCH.

The MIB 440 contains information on how user equipment ("UE") can receive a system information block 1 ("SIB₁", generally designated) that is transmitted in a second NR-physical broadcast channel (referred to as "NR-PBCH₂") 450. Of course, the system information block 1 "SIB₁" and/or other system information blocks (or other information such as the MIB 440) may be transmitted on other channels. The NR-PBCH₂ may be realized/implemented as a Physical Downlink Control Channel + Physical Downlink Shared Channel ("PDCCH+PDSCH") structure, where control signaling is transmitted on the PDCCH to allocate/schedule downlink transmission resources on the PDSCH for transmission of the actual SIB₁ (and possibly other SIBs). Typically, the NR-PBCH₂ 450 contains the remaining system information to enable a UE to access the cell (*e.g.,* the SIBi, the SIBs are generally designated 460). In the case wherein only minimal information is necessary, then the SIB₁ will contain the necessary configurations for the benefit of the UE. In NR, the system information ("SI") has been divided into "minimum SI" and "other SI". The minimum SI consists of the system information parameters in the MIB and SIB₁. The SIB₁ is also referred to as the "remaining minimum SI" ("RMSI"). In case the UE is only able to detect the MIB 440 but not the SIBs 460 and it does not have any valid previously received copy of the SIBs 460 and has no information on how to request an on-demand transmission of the SIBs 460, then it shall consider itself to be out of coverage (for that particular coverage area). The UE may still be in communication with another coverage area such as another radio access technology ("RAT") such as global system for mobile communications ("GSM").

By transmitting SIB₁ in a physical broadcast channel configured in the MIB 440, multiple cells and beams may cooperate to provide essential SIBs 460, for example, using single frequency network ("SFN") modulation. The following structure is assumed for the distribution of the minimum system information in NR. First, the PCI 420 and the MIB 440 is transmitted in a synchronization signal ("SS") block (NR-PSS + NR-SSS 410 and NR-PBCH₁ 430) with a period of X₁ milliseconds ("ms"). Also, at least the SIB₁ is transmitted in a second physical broadcast channel ("NR-PBCH₂") 450 that is configured in the MIB 440. The SIB₁ contains information about how the other SIBs are transmitted including, without limitation, a configuration of the other SIBs or possibly multiple sets of the SIBs for multiple beams and multiple cells. The NR-PBCH₂ 450 is transmitted with a period of X₂ ms, where X₂ ≥ X₁. Note that the SIBs 460 on NR-PBCH₂ 450 may be transmitted in a window, which is periodically recurring. However, the actual transmission occasion within this window may differ between different occurrences of the window, resulting in some jitter on the periodicity of the actual SIB transmissions.

The SIBs 460 may be transmitted from the same or different nodes from nodes transmitting the PCI 420 and the MIB 440. In case the PCI 420 and the MIB 440 (NR-PSS/NR-SSS 410 and NR-PBCH₁ 430) and the SIBs 460 (NR-PBCH₂ 450) are transmitted from different nodes, then the UE can receive both the channels in the case they are transmitted on the same frequency. In case the MIB 440 and the SIBs 460 are transmitted on different frequencies there are different options to consider. A UE might receive information related to another frequency band or a different radio access technology ("RAT"). For example, if a UE is connected to the LTE it may receive the content of the SIBs 460 in NR (NR-PBCH₂ 450), while it is connected to the LTE. Then, when it measures on the NR carrier, it may receive the PCI 420 and the MIB 440 (NR-PBCHi 430) and check that, for instance, a ValueTag(s) is valid (*e.g*., in SIB₁ or partial SIBi) and that it has acquired the correct SIB configuration corresponding to, for instance, the SI Index before using that information. Secondly, the UE may receive the SIBs 460 (NR-PBCH₂ 450) on another frequency band, which may allow more flexible network options. FIGURE 4 also illustrates on-demand SIBs (generally designated 490) associated with a physical downlink control channel ("PDCCH") 470 and a physical downlink shared channel ("PDCCH") 480 with or without radio resource control ("RRC") configuration.

For enabling long network discontinuous transmission ("DTX"), it is beneficial to define the PSS/SSS periodicity to be as large as possible without compromising the cell's accessibility. In case the PSS/SSS periodicity is, for instance, 80 ms, it makes sense to transmit the MIB after every PSS/SSS transmission. It is not obvious whether there should be a MIB transmission after every PSS/SSS transmission in case the PSS/SSS is transmitted more often. By separating the minimum system information into two physical broadcast channels (MIB in NR-PBCH₁ and other essential SIBs in NR-PBCH₂), the system information is efficiently distributed in the scenarios relevant for NR.

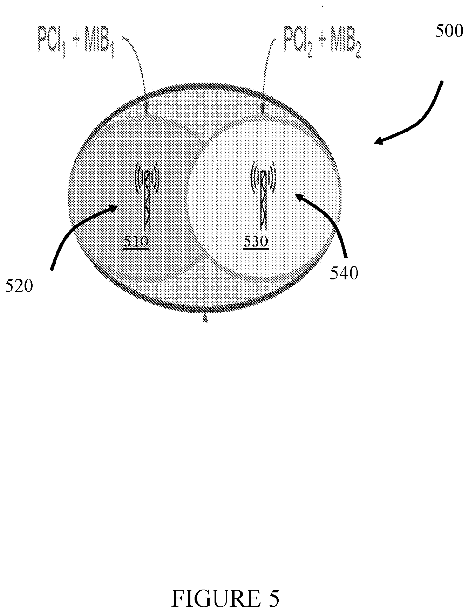

Turning now to FIGURE 5, illustrated is a system level diagram of an embodiment of joint transmission of system information blocks in a multiple cell communication system 500. The illustrated embodiment depicts how minimum system information can be transmitted in a multiple cell scenario (*e.g*., a centralized/cloud radio access network ("C-RAN") deployment) including first and second cells 510, 530. Each node (*e.g.,* a base station such as an eNB, gNB 520, 540) transmits a separate PCI and MIB (*i.e.,* the two nodes have transmit PCIs and MIBs, designated PCI₁+MIB₁ and PCI₂+MIB₂). The PCIs are different and define the two cells 510, 530 in this example. Each cell 510, 530 transmits one MIB each in an omnidirectional beam together with the PCI. In addition, the two base stations 520, 540 may jointly transmit the SIBs in a second physical broadcast channel ("NR-PBCH₂") using a single-frequency network ("SFN") transmission format. The periodically broadcasted SIBs may include one joint SIB₁ and two configurations of SIB₂ parameters (one per PCI) in a same message (*e.g*., SI message). In this example, the configurations may differ in, for instance, which primary random access channel ("PRACH") preambles that are defined for accessing the cell. Hence, a UE receiving the PCI from one of the base stations and the jointly transmitted SIBs with PCI associations can find the SIBs associated with the received PCI in, for instance, the joint transmission. That is, the PCI is used as an index into a SIB table provided through, for instance, a joint SFN transmission. Instead of the PCI, it is possible to use a dedicated parameter as an index pointing to one of the jointly transmitted SIB configurations. Such an explicit index may be included in the MIB, or generally in the PBCH (*e.g.,* a beam index may be encoded in up to three bits of PBCH and up to three bits of demodulation reference signal ("DMRS") for the PBCH).

The format of the system information in LTE, as well as in the above described index based approach, does not take into account that a cell may consist of multiple beams (especially in the high-frequency bands considered for 5G networks). Each beam may employ different specific values for some of the system information parameters, while most parameters may be common for all the beams in the cell. Furthermore, extrapolating the existing formats for system information encoding to encompass multiple beams may result in repetition of many of the SIB parameters with identical values, which in turn would result in unnecessarily large overhead. This is particularly undesirable in a system for which "lean design" is a loadstar to reduce the energy consumption in the network.

The solution introduced herein is based on an approach wherein a SIB is encoded jointly for multiple cells and beams, and a UE can extract one particular SIB from that encoding that is valid for a particular cell and beam. With this approach, a SIB consists of a number of parameters applicable in the entire cell and a number of parameters that exist in one or more versions/variants, where each version/variant is valid in one or more beam(s) in the cell.

The association between a beam and a version/variant of the beam specific parameters is preferably realized through an index, which also may be called a ValueTag that is encoded together with the concerned version/variant of the beam specific parameters. The index (such as a ValueTag) is, explicitly or implicitly, transmitted in the corresponding beam, and may be included in the MIB or the PBCH. Instead of encoding each SIB separately, the parameters that are common for all cells are encoded first. Then, for each cell, the parameters that are common for all beams in that cell are encoded next and then the beam specific parameters for each beam in that cell. In summary, this efficient encoding of the data consists of first encoding parameters common to all cells in the configuration set, then for each cell in the configuration set, encode parameters that are specific for the cell, and finally, for each beam in each cell, encode parameters that are specific for the beam.

The system and method takes into account that a cell may comprise multiple beams, each of which has one or more system information parameter(s) that is/are specific for the beam or a subset of the beams. Furthermore, the solution provides efficient encoding of different variants of SIBs used in different cells and in different beams. This is well adapted to the envisioned cell/beam configurations in the high-frequency band deployments of future 5G-NR communication systems and the efficient encoding reduces the number of broadcast system information bits, resulting in reduced interference, reduced network energy consumption, and increased system coverage.

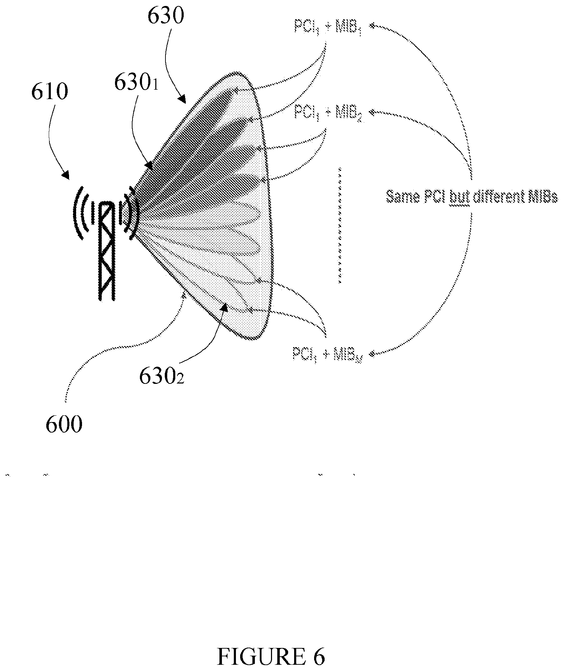

Turning now to FIGURE 6, illustrated is a system level diagram of an embodiment of joint transmissions 600 of system information blocks in a multiple beam communication system from a radio access node such as a base station 610. In the illustrated embodiment, one cell defined by a physical cell identity PCIi consists of eight beams (generally designated 630n, with first and second beams designated 630i, 630₂, respectively). In this example, each set of two nearby beams use the same MIB. By allowing for different MIBs in different beams, the communication system can make use of different PRACH parameters (*e.g*., PRACH preambles and PRACH timing window) in different beams. The different PRACH parameters are provided in a subsequent SIB₂. For example, see Tdoc R2-168290, 3GPP TSG-RAN WG2 #96, entitled "Initial System Access in Challenging Coverage Scenarios," Reno, Nevada, U.S.A. (November 14-18, 2016). By also allowing for some beams (*e.g.*, the adjacent pair of beams) to transmit identical MIBs, a smaller number of PRACH timing windows is defined for the number of beams in the downlink. Thus, the joint transmission 600 of SIBs includes SIB₁ + *M* configurations of SIB₂ (one per SI Index (or generally "index"), as indicated in the MIBs). The SIB₂ configurations may contain different PRACH window timing and preamble sets. It should be noted that information derived from the PBCH may be part of the MIB.

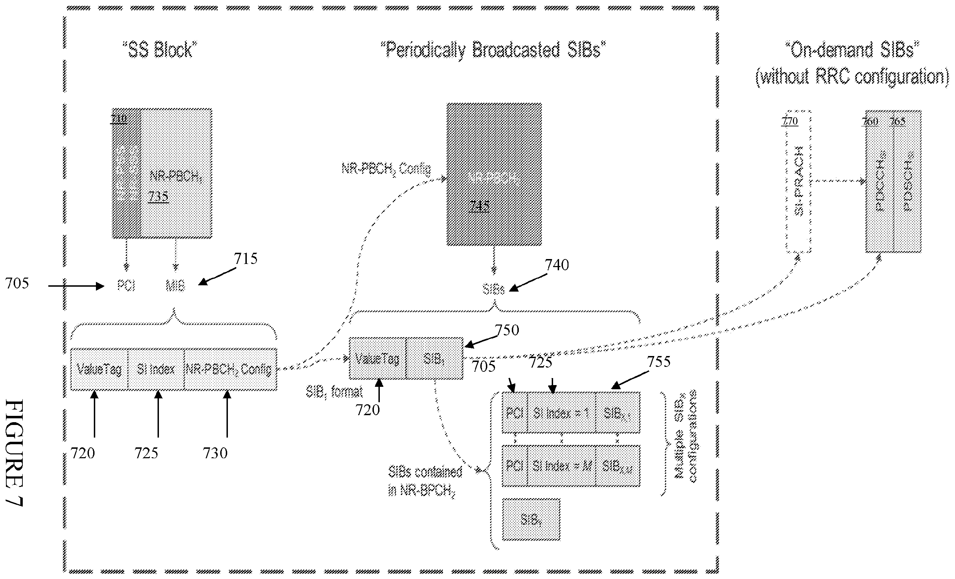

Since the SIBs in NR-PBCH₂ may be relevant for multiple beams (FIGURE 6) as well as nodes/cells with different PCI (FIGURE 5**Error! Reference source not found.**) (each with its own set of beams), a ValueTag (indicating the version of the system information) in the MIB (or SIBi) may not be sufficient. In addition to the system information ValueTag, a system information index (denoted SI Index in FIGURE 7) may be introduced to distinguish which configuration to use in each beam or cell in case the NR-PBCH₂ contains system information relevant for more than one beam or cell. Note that ValueTag(s) (and possibly also SI Index) may alternatively be located in SIB₁. Also note that there may be multiple ValueTags in SIBi, each associated with a SIB or a SI message.

Turning now to FIGURE 7, illustrated is a block diagram of an embodiment of a structure of system information in a communication system. A PCI 705 is signaled by an index of NR-PSS/NR-SSS 710; a MIB 715 is signaled in a first broadcast channel denoted NR-PBCH₁ 735; and the periodically broadcasted SIBs 740 are signaled in a second broadcast channel denoted NR-PBCH₂ 745. Of course, additional information fields or different channels may be included or used as well. A synchronization signal ("SS") block provides the PCI 705 and the MIB 715. The MIB 715 may contain a ValueTag 720, an SI Index 725, and a configuration 730 enabling the UE to receive the SIBs on NR-PBCH₂ 745. The ValueTag 720 (located in the MIB or SIB₁) can check the validity of the system information. Note there may be multiple ValueTags in SIB₁ with this purpose, each associated with a SIB or SI message. The SI Index 725 may be interpreted as selecting which configuration in SIB₂ that shall apply to each beam. This enables different beams to use different parameter configurations. A prime example may be that different beams may have different PRACH time slots and/or different PRACH preamble sequences. The MIB 715 may also include other information such as, without limitation, timing information and a public land mobile network identifier ("PLMN ID") list. The PLMN ID list may also be located in SIB₁.

An example of an SIB₁ format may include the ValueTag 720, or multiple ValueTags associated with different SIBs or SI messages, and the SIB₁ system information 750. The SIB₁ system information 750 may include the PCI 705, the SI Index 725 and system information 755 with respect to the corresponding SI Index 725. In the example provided above, the SI Index 725 is used to enable different beams to use different system information without requiring that each beam transmits that system information explicitly. As beams become many and narrow, the UE will remain for a short time on each beam before entering a new beam belonging to the same cell. When that happens, the UE expeditiously acquires the system information associated with this new beam. If the UE already has a stored copy of that system information, it may immediately use that, since the SI Index 725 transmitted in the MIB 715 in the concerned beam indicates which parameter set that is valid in the beam.

The alternative would be that each beam transmits its own entire system information with a high periodicity that would be much more expensive compared to only transmitting a SI Index 725, and would have a negative impact on the network energy consumption, the interference in the network and the overall system performance. The system information may include a configuration of how to request and receive on-demand system information, which may be part of another SIB. The on-demand SIBs associated with a physical downlink control channel ("PDCCH") 760 and a physical downlink shared channel ("PDSCH") 765 without radio resource control ("RRC") configuration also include system information for PRACH resources 770. See, for example, Tdoc R2-168289, 3GPP TSG-RAN WG2 #96, entitled "On Demand Distribution of SI," Reno, Nevada, U.S.A. (November 14-18, 2. 2016).

In accordance with the solution introduced herein, the encoding of a system information block in a collection of system information blocks, for example SIB₂, may be as set forth below:

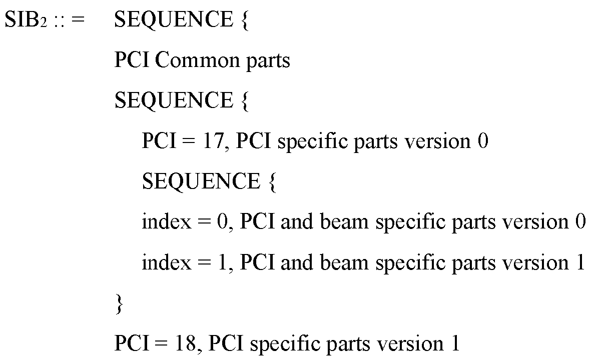

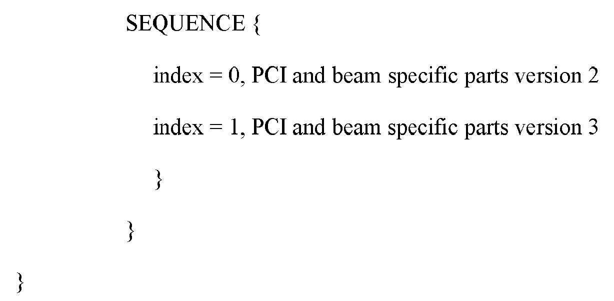

Typically, the set of physical random access preambles (PRACH preambles) are different in different cells while, for instance, power control parameters are the same. Different beams may define different PRACH timing windows to enable receiver beamforming of the PRACH transmissions from the UEs to the base station. Optionally, if multiple beams (*e.g.,* a set of beams) are associated with the same PRACH timing window, the PRACH preambles may also be different for the different beams of the set, in order to let the preamble indicate to the network which downlink beam the UE received. For example, different, non-overlapping, sets of preambles may be associated with the different beams of a set of beams associated with the same PRACH time and frequency configuration.

The solution introduced herein is an approach where a SIB is encoded jointly for multiple cells and beams and a UE can extract one particular SIB from that encoding that is valid for a particular cell and beam. Thus, a SIB consists of a number of parameters applicable in the entire cell and a number of parameters that exist in one or more versions/variants, where each version/variant is valid in one or more beam(s) in the cell.

Note that there may be cases where the cell level differentiation of parameter values is omitted, such that a SIB (or all SIBs) include parameters applicable in a single cell (the cell in which the SIB parameters are provided, *e.g.*, periodically broadcast or requested on-demand). For a multi-beam cell, the beam level differentiation would still result in multiple versions/variants (*e.g.*, different values) of SIB parameters that are valid in different beams in the cell. Likewise, there may be cases where SIB parameters are applicable in multiple cells, but there is only a single beam per cell, so that the beam level differentiation of parameter values within each cell may be omitted. Both these cases (single cell with multiple beams and multiple cells with a single beam each) may be seen as an example where both multiple cells and multiple beams (in at least one of the multiple cells) are covered by different versions/variants of some SIB parameters.

On a more detailed level the solution provides a method for encoding a collection of SIBs valid for different cells and beams including parameters common for all cells are encoded in a first common part. Then, the parameters common for all beams in a cell are encoded in a second common part per cell. Finally, without limitation, parameters that differ for a particular beam in a cell are encoded in a beam specific part per cell and beam. The method may also include separating system information into two physical broadcast channels. One of the two physical broadcast channels is a new radio-physical broadcast channel 1 and the other is a new radio-physical broadcast channel 2. The new radio-physical broadcast channel 2 may be realized/implemented as a Physical Downlink Control Channel + Physical Downlink Shared Channel ("PDCCH+PDSCH") structure, where control signaling is transmitted on the PDCCH to allocate/schedule downlink transmission resources on the PDSCH for transmission of the actual data to be broadcast, *e.g.,* SIB₁.

The SIB may include parameters applicable in the entire cell and parameters that exist in one or more cell versions/variants, where each cell version/variant is valid in one or more beam(s) in the cell. Also, an association between a beam and a cell version/variant of beam-specific parameters is realized through an index. A system information index is employed to distinguish which configuration to use in each beam or cell. For a cell, the system information index may be realized as or in according with a PCI. For a beam, the system information index may be realized as a beam index, or SS Block Index, which in turn may be a time indication associated with a beam transmission, where there is a relation between the time indication and the beam's number in a beam sweep, e.g., a beam sweep in the form of a SS Burst Set. The system information index may be employed when a second new radio-physical broadcast channel contains system information relevant for more than one beam or cell. The system information index may be interpreted as selecting which configuration in a system information block type 1, system information block type 2, and/or any other system information type shall apply to each beam in a cell.

In one embodiment, a SS block reception may provide the UE with some information related to a SS block position within a SS burst set and include a SS block index ("SSBI"). In the case of beam sweeping, there may be a simple relation between the SSBI and a beam index associated with the SI Index.

In case a cell has several beams, then the system information for the cell will contain information related to all beams within that cell. In some cases, it is possible to specify that the RRC_IDLE and RRC_INACTIVE mode UE-behavior depends on which beam the UE is currently in. For example, the timing of the PRACH window might be different for different beams (*e.g*., to enable analogue PRACH reception beamforming). The UE may also use different PRACH preambles depending on which SS block beam it receives (*e.g*., to enable beam identification). To allow for this, there may be different beam dependent versions of the minimum SI.

Thus, when reading the minimum SI for a cell, the UE will receive information related to all beams in the cell. In some cases, the minimum SI may contain different values for one or more parameters (*e.g.*, PRACH timing window or PRACH root sequence index) corresponding to different SS block beams in the cell. In the case that different beams in a cell have different SI, then the SSBI can be used to differentiate which part of the SI that is valid in a beam. The UE may read the minimum SI and extract the SI valid in the current beam (*e.g*., corresponding to a SSBI). Information related to other beams may be stored and used later, should the UE move to another beam.

Thus, some SI parameter values can be different between SS block beams belonging to the same cell. The SSBI can be used as an index/identifier that enables differentiation of SI in different SS block beams of the same cell. Some of the PRACH configuration parameters (related to PRACH preamble sequence, timing, and frequency offset) may be defined as optional lists to enable configuration of different parameter values for different SSBIs. Some of the random access response ("RAR") configuration parameters (related to a tracking reference signal ("TRS"), RAR timing) may be defined as optional lists to enable configuration of different parameter values for different SSBIs.

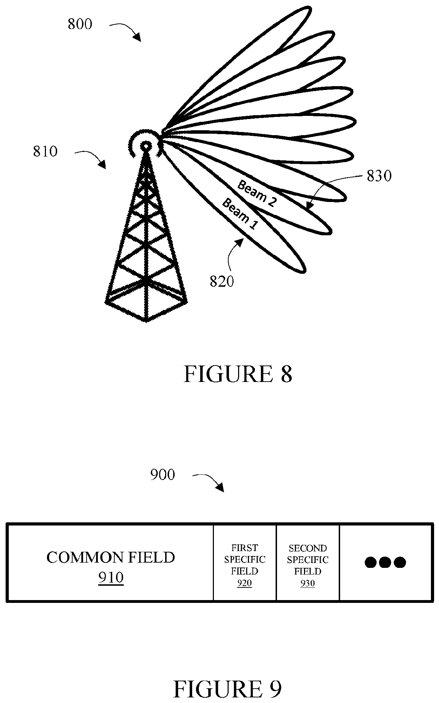

Turning now to FIGURE 8, illustrated is a system level diagram of an embodiment of a multiple beam communication system 800. The communication system 800 includes a radio access node 810 that produces a plurality of beams with a first beam being designated 820 and a second beam being designated 830.

With continuing reference to FIGURE 8, FIGURE 9 illustrates a block diagram of an embodiment of a system information block 900. The system information block 900 includes a common field 910 having common system information associated with the plurality of beams including the first beam 820 and the second beam 830. The system information block 900 includes a first beam specific field 920 having first beam specific system information indexed to the first beam 820. The system information block 900 includes a second beam specific field 930 having second specific system information indexed to the second beam 830.

The first beam specific system information associated with the first beam 820 may include and/or be associated with information for access to a first cell or a second cell (*e.g.,* first cell 510 or second cell 520 of FIGURE 5) of a communication system. The second specific system information associated with the second beam 830 may include and/or be associated with information for access to a first cell or a second cell (*e.g.,* first cell 510 or second cell 520 of FIGURE 5) of a communication system. In other words, the first and second beams 820, 830 may contain and/or be associated with system information for access to the same or different cells.

The common system information may include common physical random access channel ("PRACH") configuration information common for the plurality of beams including the first beam 820 and the second beam 830. The first beam specific system information may include first specific PRACH configuration information specific for the first beam 820, and the second beam specific system information may include second specific PRACH configuration information specific for the second first beam 830. The common PRACH configuration information, and the first and second specific PRACH configuration information includes timing parameters and/or PRACH preamble parameters. The first beam specific system information may be indexed to the first beam 820 by a first specific SI Index (Index₁, *e.g*., a beam index or SS Block Index). The second beam specific system information may be indexed to the second beam 830 by a second specific SI Index (Index₂, *e.g*., a beam index or SS Block Index).

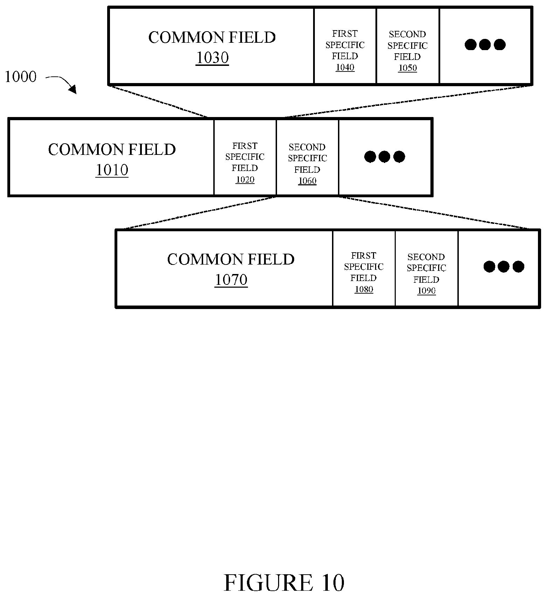

Turning now to FIGURE 10, illustrated is a block diagram of an embodiment of a system information block 1000. The system information block 1000 includes a common field 1010, a first specific field 1020 and a second specific field 1060. The first specific field 1020 includes common field 1030, a first specific field 1040 and a second specific field 1050. The second specific field 1060 includes common field 1070, a first specific field 1080 and a second specific field 1090. Thus, the system information block 1000 facilitates a hierarchal architecture wherein the first specific field 1020 and the second specific field 1060 include their own respective common fields and specific fields.

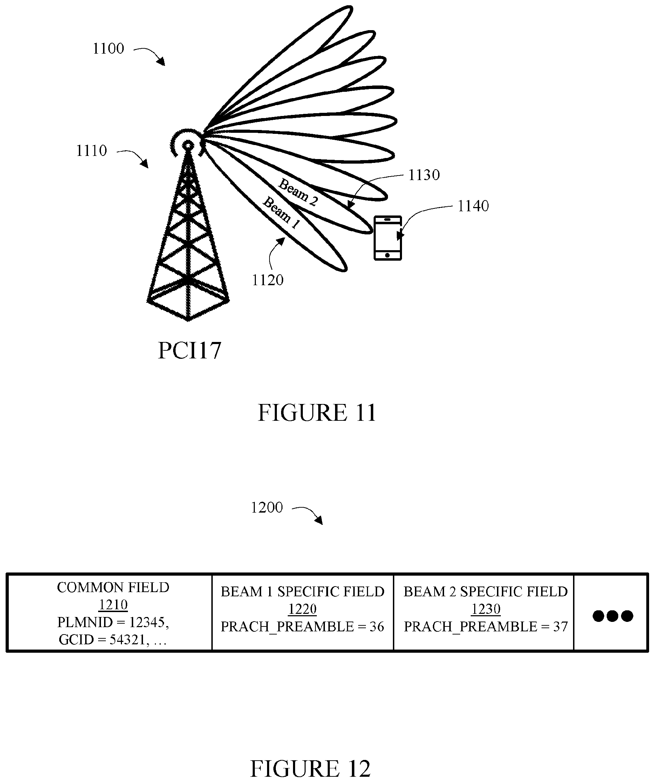

Turning now to FIGURE 11, illustrated is a system level diagram of an embodiment of a multiple beam communication system 1100. The communication system 1100 includes a radio access node 1110 (including a physical cell identity ("PCI") of 17) that produces a plurality of beams with a first beam being designated 1120 and a second beam being designated 1130. In this particular embodiment, a user equipment 1140 is in communication with the second beam 1130.

With continuing reference to FIGURE 11, FIGURE 12 illustrates a block diagram of an embodiment of a system information block 1200. The system information block 1200 includes a common field 1210 having common system information associated with the plurality of beams including the first beam 1120 and the second beam 1130. The system information block 1200 includes a first beam specific field 1220 having first beam specific system information indexed to the first beam 1120. The system information block 1200 includes a second beam specific field 1230 having second specific system information indexed to the second beam 1130.

The common field 1210 includes a public land mobile network identifier ("PLMN ID") of 12345 and a global cell identifier ("GCID") of 54321. In addition to the common system information, the first beam specific field 1220 includes first beam specific system information including a PRACH preamble of 36. In addition to the common system information, the second beam specific field 1230 includes second beam specific system information including a PRACH preamble of 37. The reference to a PRACH preamble also encompasses a set of PRACH preambles.

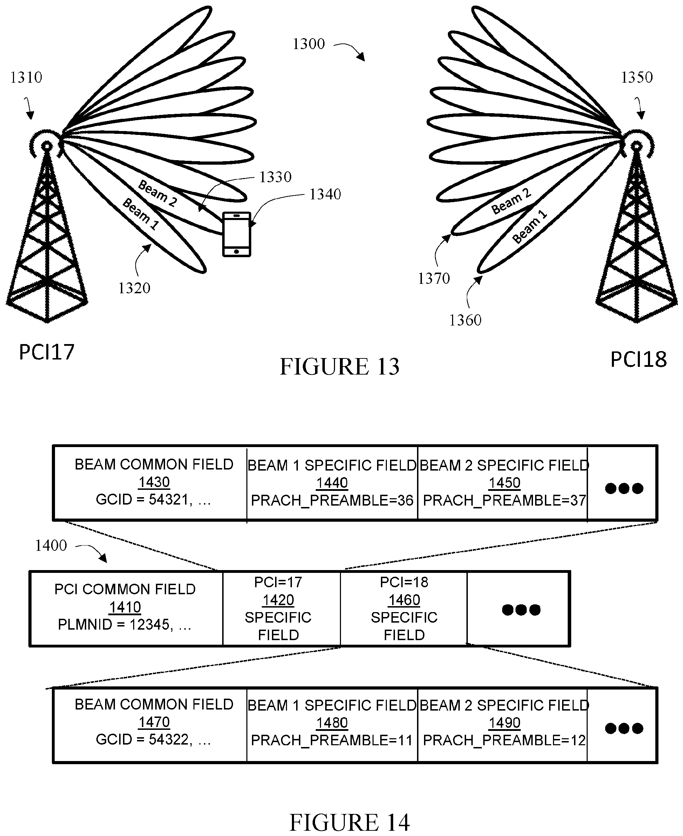

Turning now to FIGURE 13, illustrated is a system level diagram of an embodiment of a multiple beam communication system 1300. The communication system 1300 includes a first radio access node 1310 (serving a cell with a physical cell identity ("PCI") of 17) that produces a plurality of beams with a first beam being designated 1320 and a second beam being designated 1330. In this particular embodiment, a user equipment 1340 is in communication with the second beam 1330. The communication system 1300 includes a second radio access node 1350 (serving a cell with a physical cell identity ("PCI") of 18) that produces a plurality of beams with a first beam being designated 1360 and a second beam being designated 1370.

With continuing reference to FIGURE 13, FIGURE 14 illustrates a block diagram of an embodiment of a system information block 1400. The system information block 1400 includes a PCI common field 1410 having common system information associated with a plurality of cells including a first cell associated with the first radio access node 1310 and a second cell associated with the second radio access node 1350. The system information block 1400 includes a first cell specific field 1420 having first cell specific system information indexed to the first cell associated with the first radio access node 1310 (indexed to PCI 17). The system information block 1400 includes a second cell specific field 1460 having second specific system information indexed to the second cell associated with the second radio access node 1350 (indexed to PCI 18).

The PCI common field 1410 includes a PLMN ID of 12345. The first cell specific field 1420 includes a beam common field 1430 (with a GCID of 54321), a first beam specific field 1440 (with a PRACH preamble of 36) and a second beam specific field 1450 (with a PRACH preamble of 37). The second cell specific field 1460 includes a beam common field 1470 (with a GCID of 54322), a first beam specific field 1480 (with a PRACH preamble of 11) and a second beam specific field 1490 (with a PRACH preamble of 12). Thus, the system information block 1400 facilitates a hierarchal architecture for cells and corresponding beams wherein the first cell specific field 1420 and the second cell specific field 1460 include their own respective common fields and specific fields.

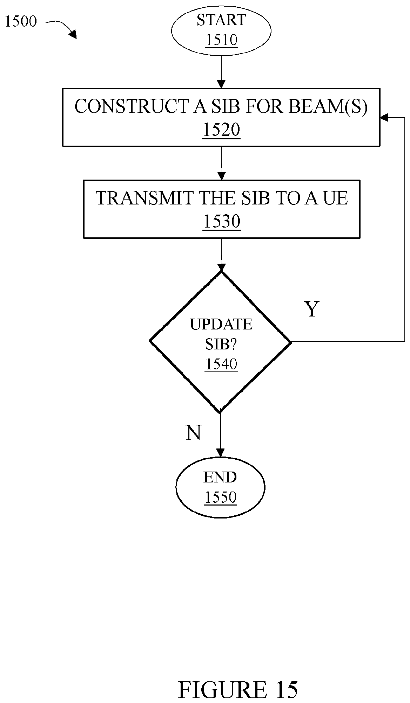

Turning now to FIGURE 15, illustrated is a flow diagram of an embodiment of a method 1500 of operating communication system. In addition to the method steps, the discussion of the method 1500 that follows will identify example elements (in parentheses) from preceding FIGUREs. The method 1500 is performed at least in part by a radio access node (120, 300, 810) in a communication system (100) including a first beam (820) and a second beam (830). The method 1500 begins at a start step or module 1510. At a step or module 1520, the radio access node (120, 300, 810) constructs a system information block (900) for the first beam (820). The system information block (900) includes a common field (910) having common system information associated with the first beam (820) and the second beam (830), and a first beam specific field (920) having first beam specific system information indexed to the first beam (820). The system information block (900) may also include a second beam specific field (930) having second specific system information indexed to the second beam (830). The system information associated with the first beam (820) and/or the second beam (830) is derivable from a physical broadcast channel ("PBCH").

The first beam specific system information associated with the first beam (820) may include and/or be associated with information for access to a first cell or a second cell (*e.g.,* first cell 510 or second cell 520 of FIGURE 5) of a communication system. The second specific system information associated with the second beam (830) may include and/or be associated with information for access to a first cell or a second cell (*e.g.,* first cell 510 or second cell 520 of FIGURE 5) of a communication system. In other words, the first and second beams (820, 830) may contain and/or be associated with system information for access to the same or different cells.

The common system information may include common physical random access channel ("PRACH") configuration information common for the plurality of beams including the first beam (820) and the second beam (830). The first beam specific system information may include first specific PRACH configuration information specific for the first beam (820), and the second beam specific system information may include second specific PRACH configuration information specific for the second first beam (830). The common PRACH configuration information, and the first and second specific PRACH configuration information includes timing parameters and/or PRACH preamble parameters. The first beam specific system information may be indexed to the first beam (820) by a first specific SI Index (Index₁). The second beam specific system information may be indexed to the second beam (830) by a second specific SI Index (Index₂).

Additionally, the system information block (900, 1400) may include a common cell field (1410) having common system information for a first cell (510) and a second cell (520) of the communication system (100). The system information block (900, 1400) may also include a first cell specific field (1420) having first cell specific information for the first cell (510) of the communication system (100), and a second cell specific field (1460) having second cell specific information for the second cell (520) of the communication system (100).

At a step or module 1530, the radio access node (120, 300, 810) transmits the system information block (900) to a user equipment (110, 200) for access to the communication system (100). At a decisional step or module 1540, the radio access node (120, 300, 810) determines if the system information block (900) should be updated. If the system information block (900) should be updated, the method 1500 returns to the step or module 1520, otherwise the method ends at an end step or module 1550.

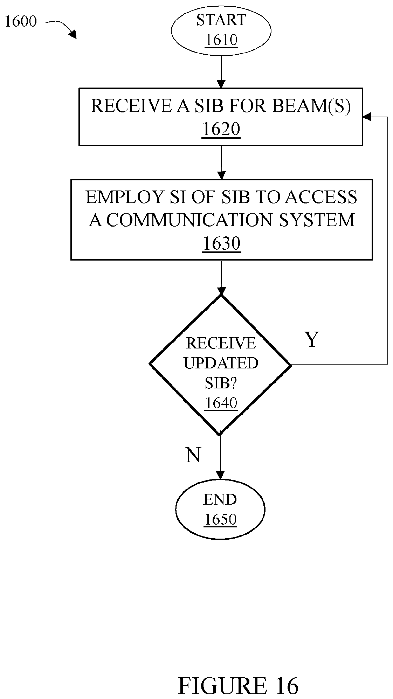

Turning now to FIGURE 16, illustrated is a flow diagram of an embodiment of a method 1600 of operating communication system. In addition to the method steps, the discussion of the method 1600 that follows will identify example elements (in parentheses) from preceding FIGUREs. The method 1600 is performed at least in part by a user equipment (110, 200) in a communication system (100) including a first beam (820) and a second beam (830). The method 1600 begins at a start step or module 1610. At a step or module 1620, the user equipment (110, 200) receives a system information block (900) for the first beam (820). The system information block (900) includes a common field (910) having common system information associated with the first beam (820) and the second beam (830), and a first beam specific field (920) having first beam specific system information indexed to the first beam (820). The system information block (900) may also include a second beam specific field (930) having second specific system information indexed to the second beam (830). The system information block (900) may include other fields and indices as set forth above with respect to FIGURE 15, and the preceding FIGUREs.

At a step or module 1630, the user equipment (110, 200) employs the common system information and the first beam specific system information of the system information block (900) to access to the communication system (100). The user equipment (110, 200) may employ the first beam specific system information (and/or information linked thereto) associated with the first beam (820) to access a first cell (510) or a second cell (520) of the communication system (100), and employ the second specific system information (and/or information linked thereto) associated with the second beam (830) to access the first cell (510) or the second cell (520) of the communication system (100).

At a decisional step or module 1640, it is determined if the user equipment (110, 200) will receive an update to the system information block (900). If the user equipment (110, 200) will receive an updated system information block (900), the method 1600 returns to the step or module 1620, otherwise the method ends at an end step or module 1650.

As described above, the exemplary embodiments provide both a method and corresponding apparatus consisting of various modules providing functionality for performing the steps of the method. The modules may be implemented as hardware (embodied in one or more chips including an integrated circuit such as an application specific integrated circuit), or may be implemented as software or firmware for execution by a processor. In particular, in the case of firmware or software, the exemplary embodiments can be provided as a computer program product including a computer readable storage medium embodying computer program code (*i.e.,* software or firmware) thereon for execution by the computer processor. The computer readable storage medium may be non-transitory (*e.g*., magnetic disks; optical disks; read only memory; flash memory devices; phase-change memory) or transitory (*e.g.,* electrical, optical, acoustical or other forms of propagated signals-such as carrier waves, infrared signals, digital signals, *etc.*). The coupling of a processor and other components is typically through one or more busses or bridges (also termed bus controllers). The storage device and signals carrying digital traffic respectively represent one or more non-transitory or transitory computer readable storage medium. Thus, the storage device of a given electronic device typically stores code and/or data for execution on the set of one or more processors of that electronic device such as a controller.

Although the embodiments and its advantages have been described in detail, it should be understood that various changes, substitutions, and alterations can be made herein without departing from the spirit and scope thereof as defined by the appended claims. For example, many of the features and functions discussed above can be implemented in software, hardware, or firmware, or a combination thereof. Also, many of the features, functions, and steps of operating the same may be reordered, omitted, added, *etc.*, and still fall within the broad scope of the various embodiments.

Moreover, the scope of the various embodiments is not intended to be limited to the particular embodiments of the process, machine, manufacture, composition of matter, means, methods and steps described in the specification. As one of ordinary skill in the art will readily appreciate from the disclosure, processes, machines, manufacture, compositions of matter, means, methods, or steps, presently existing or later to be developed, that perform substantially the same function or achieve substantially the same result as the corresponding embodiments described herein may be utilized as well. Accordingly, the appended claims are intended to include within their scope such processes, machines, manufacture, compositions of matter, means, methods, or steps.

## Claims

1. A radio access node (120, 300, 810) in a communication system (100) including a first beam (820) and a second beam (830), comprising:
processing circuitry (310), configured to:
construct a system information block (900, 1400) for said first beam (820), including:
a common field (910, 1430) having common system information associated with said first beam (820) and said second beam (830),
a first beam specific field (920, 1440) having first beam specific system information indexed to said first beam (820),
a common cell field (1410) having common system information for a first cell (510) and a second cell (520) of said communication system (100), and
a first cell specific field (1420) having first cell specific system information indexed to the first cell, wherein the first cell specific field includes the common field (910, 1430) and the first beam specific field (920, 1440); and
transmit said system information block (900, 1400) to a user equipment (110, 200) for access to said communication system (100), wherein:
the system information block (900, 1400) facilitates a hierarchal architecture for cells and corresponding beams.

2. The apparatus (120, 300, 810) as recited in Claim 1 wherein said system information block (900) comprises a second beam specific field (930) having second specific system information indexed to said second beam (830).

3. The apparatus (120, 300, 810) as recited in Claim 2 wherein said first beam specific system information associated with said first beam (820) comprises information for access to a first cell (510) of said communication system (100), and said second specific system information associated with said second beam (830) comprises information for access to a second cell (520) of said communication system (100).

4. The apparatus (120, 300, 810) as recited in Claim 2 wherein said first specific system information associated with said first beam (820) comprises information for access to a first cell (510) of said communication system (100), and said second specific system information associated with said second beam (830) comprises information for access to said first cell (510) of said communication system (100).

5. The apparatus (120, 300, 810) as recited in Claim 1 wherein said common system information includes common physical random access channel (PRACH) configuration information common for said first beam (820) and said second beam (830), and said first beam specific system information includes first specific PRACH configuration information specific for said first beam (820).

6. The apparatus (120, 300, 810) as recited in Claim 5 wherein said common PRACH configuration information and said first specific PRACH configuration information includes timing parameters and/or PRACH preamble parameters.

7. The apparatus (120, 300, 810) as recited in Claim 1 wherein said first beam specific system information is indexed to said first beam (820) by a first specific SI Index (Index₁).

8. The apparatus (120, 300, 810, 1310) as recited in Claim 1 wherein said system information block (900, 1400) comprises a second cell specific field (1460) having second cell specific information for a second cell (520) of said communication system (100).

9. A method (1500) performed by a radio access node (120, 300, 810) in a communication system (100) including a first beam (820) and a second beam (830), comprising:
constructing (1520) a system information block (900, 1400) for said first beam (820), including:
a common field (910, 1430) having common system information associated with said first beam (820) and said second beam (830),
a first beam specific field (920, 1440) having first beam specific system information indexed to said first beam (820),
a common cell field (1410) having common system information for a first cell (510) and a second cell (520) of said communication system (100), and
a first cell specific field (1420) having first cell specific system information indexed to the first cell, wherein the first cell specific field includes the common field (910, 1430) and the first beam specific field (920, 1440); and
transmitting (1530) said system information block (900, 1400) to a user equipment (110, 200) for access to said communication system (100), wherein:
the system information block (900, 1400) facilitates a hierarchal architecture for cells and corresponding beams.

10. A user equipment (110, 200) in a communication system (100) including a first beam (820) and a second beam (830), comprising:
processing circuitry (210), configured to:
receive a system information block (900, 1400) for said first beam (820), including:
a common field (910, 1430) having common system information associated with said first beam (820) and said second beam (830),
a first beam specific field (920, 1440) having first beam specific system information indexed to said first beam (820),
a common cell field (1410) having common system information for a first cell (510) and a second cell (520) of said communication system (100), and
a first cell specific field (1420) having first cell specific system information indexed to the first cell, wherein the first cell specific field includes the common field (910, 1430) and the first beam specific field (920, 1440);
employ said common system information and said first beam specific system information of said system information block (900, 1400) to access said communication system (100), wherein:
the system information block (900, 1400) facilitates a hierarchal architecture for cells and corresponding beams.

11. A method (1600) performed by a user equipment (110, 200) in a communication system (100) including a first beam (820) and a second beam (830), comprising:
receiving (1620) a system information block (900, 1400) for said first beam (820), including:
a common field (910, 1430) having common system information associated with said first beam (820) and said second beam (830),
a first beam specific field (920, 1440) having first beam specific system information indexed to said first beam (820),
a common cell field (1410) having common system information for a first cell (510) and a second cell (520) of said communication system (100), and
a first cell specific field (1420) having first cell specific system information indexed to the first cell, wherein the first cell specific field includes the common field (910, 1430) and the first beam specific field (920, 1440); and
employing (1630) said common system information and said first beam specific system information of said system information block (900, 1400) to access said communication system (100), wherein:
the system information block (900, 1400) facilitates a hierarchal architecture for cells and corresponding beams.

## Patentansprüche

1. Funkzugangsknoten (120, 300, 810) in einem Kommunikationssystem (100), das einen ersten Strahl (820) und einen zweiten Strahl (830) umfasst, aufweisend:
Verarbeitungsschaltungsanordnung (310), die konfiguriert ist zum:
Erstellen eines Systeminformationsblocks (900, 1400) für den ersten Strahl (820), umfassend:
ein gemeinsames Feld (910, 1430) mit gemeinsamen Systeminformationen, die mit dem ersten Strahl (820) und dem zweiten Strahl (830) assoziiert sind,
ein erstes strahlenspezifisches Feld (920, 1440) mit ersten strahlenspezifischen Systeminformationen, die auf den ersten Strahl (820) hinweisen,
ein gemeinsames Zellenfeld (1410) mit gemeinsamen Systeminformationen für eine erste Zelle (510) und eine zweite Zelle (520) des Kommunikationssystems (100), und
ein erstes zellenspezifisches Feld (1420) mit ersten zellenspezifischen Systeminformationen, die auf die erste Zelle hinweisen, wobei das erste zellenspezifische Feld das gemeinsame Feld (910, 1430) und das erste strahlenspezifische Feld (920, 1440) umfasst; und
Senden des Systeminformationsblocks (900, 1400) an eine Benutzereinrichtung (110, 200) für Zugang zum Kommunikationssystem (100), wobei:
der Systeminformationsblock (900, 1400) eine hierarchische Architektur für Zellen und entsprechende Strahlen ermöglicht.

2. Vorrichtung (120, 300, 810) nach Anspruch 1, wobei der Systeminformationsblock (900) ein zweites strahlenspezifisches Feld (930) mit zweiten spezifischen Systeminformationen aufweist, die auf den zweiten Strahl (830) hinweisen.

3. Vorrichtung (120, 300, 810) nach Anspruch 2, wobei die ersten strahlenspezifischen Systeminformationen, die mit dem ersten Strahl (820) assoziiert sind, Informationen für Zugang zu einer ersten Zelle (510) des Kommunikationsnetzwerks (100) aufweisen, und die zweiten spezifischen Systeminformationen, die mit dem zweiten Strahl (830) assoziiert sind, Informationen für Zugang zu einer zweiten Zelle (520) des Kommunikationssystems (100) aufweisen.

4. Vorrichtung (120, 300, 810) nach Anspruch 2, wobei die ersten spezifischen Systeminformationen, die mit dem ersten Strahl (820) assoziiert sind, Informationen für Zugang zu einer ersten Zelle (510) des Kommunikationsnetzwerks (100) aufweisen, und die zweiten spezifischen Systeminformationen, die mit dem zweiten Strahl (830) assoziiert sind, Informationen für Zugang zur ersten Zelle (510) des Kommunikationssystems (100) aufweisen.

5. Vorrichtung (120, 300, 810) nach Anspruch 1, wobei die gemeinsamen Systeminformationen gemeinsame Informationen zur Konfiguration eines physikalischen Direktzugriffskanals (PRACH) für den ersten Strahl (820) und den zweiten Strahl (830) umfassen, und die ersten strahlenspezifischen Systeminformationen erste PRACH-Konfigurationsinformationen umfassen, die für den ersten Strahl (820) spezifisch sind.

6. Vorrichtung (120, 300, 810) nach Anspruch 5, wobei die gemeinsamen PRACH-Konfigurationsinformationen und die ersten spezifischen PRACH-Konfigurationsinformationen Taktparameter und/oder PRACH-Präambelparameter umfassen.

7. Vorrichtung (120, 300, 810) nach Anspruch 1, wobei die ersten strahlenspezifischen Systeminformationen durch einen ersten spezifischen SI-Index (Index₁) auf den ersten Strahl (820) hinweisen.

8. Vorrichtung (120, 300, 810, 1310) nach Anspruch 1, wobei der Systeminformationsblock (900, 1400) ein zweites zellenspezifisches Feld (1460) mit zweiten spezifischen Informationen für eine zweite Zelle (520) des Kommunikationssystems (100) aufweist.

9. Verfahren (1500), das von einem Funkzugangsknoten (120, 300, 810) in einem Kommunikationssystem (100) durchgeführt wird, das einen ersten Strahl (820) und einen zweiten Strahl (830) umfasst, aufweisend:
Erstellen (1520) eines Systeminformationsblocks (900, 1400) für den ersten Strahl (820), umfassend:
ein gemeinsames Feld (910, 1430) mit gemeinsamen Systeminformationen, die mit dem ersten Strahl (820) und dem zweiten Strahl (830) assoziiert sind,
ein erstes strahlenspezifisches Feld (920, 1440) mit ersten strahlenspezifischen Systeminformationen, die auf den ersten Strahl (820) hinweisen,
ein gemeinsames Zellenfeld (1410) mit gemeinsamen Systeminformationen für eine erste Zelle (510) und
eine zweite Zelle (520) des Kommunikationssystems (100), und
ein erstes zellenspezifisches Feld (1420) mit ersten zellenspezifischen Systeminformationen, die auf die erste Zelle hinweisen, wobei das erste zellenspezifische Feld das gemeinsame Feld (910, 1430) und das erste strahlenspezifische Feld (920, 1440) umfasst; und
Senden (1530) des Systeminformationsblocks (900, 1400) an eine Benutzereinrichtung (110, 200) für Zugang zum Kommunikationssystem (100), wobei:
der Systeminformationsblock (900, 1400) eine hierarchische Architektur für Zellen und entsprechende Strahlen ermöglicht.

10. Benutzereinrichtung (110, 200) in einem Kommunikationssystem (100), das einen ersten Strahl (820) und einen zweiten Strahl (830) umfasst, aufweisend:
Verarbeitungsschaltungsanordnung (210), die konfiguriert ist zum:
Empfangen eines Systeminformationsblocks (900, 1400) für den ersten Strahl (820), umfassend:
ein gemeinsames Feld (910, 1430) mit gemeinsamen Systeminformationen, die mit dem ersten Strahl (820) und dem zweiten Strahl (830) assoziiert sind,
ein erstes strahlenspezifisches Feld (920, 1440) mit ersten strahlenspezifischen Systeminformationen, die auf den ersten Strahl (820) hinweisen,
ein gemeinsames Zellenfeld (1410) mit gemeinsamen Systeminformationen für eine erste Zelle (510) und eine zweite Zelle (520) des Kommunikationssystems (100), und
ein erstes zellenspezifisches Feld (1420) mit ersten zellenspezifischen Systeminformationen, die auf die erste Zelle hinweisen, wobei das erste zellenspezifische Feld das gemeinsame Feld (910, 1430) und das erste strahlenspezifische Feld (920, 1440) umfasst; und
Einsetzen der gemeinsamen Systeminformationen und der ersten strahlenspezifischen Systeminformationen des Systeminformationsblocks (900, 1400) zum Erlangen von Zugang zum Kommunikationssystem (100), wobei:
der Systeminformationsblock (900, 1400) eine hierarchische Architektur für Zellen und entsprechende Strahlen ermöglicht.

11. Verfahren (1600), das von einer Benutzereinrichtung (110, 200) in einem Kommunikationssystem (100) durchgeführt wird, das einen ersten Strahl (820) und einen zweiten Strahl (830) umfasst, aufweisend:
Empfangen (1620) eines Systeminformationsblocks (900, 1400) für den ersten Strahl (820), umfassend:
ein gemeinsames Feld (910, 1430) mit gemeinsamen Systeminformationen, die mit dem ersten Strahl (820) und dem zweiten Strahl (830) assoziiert sind,
ein erstes strahlenspezifisches Feld (920, 1440) mit ersten strahlenspezifischen Systeminformationen, die auf den ersten Strahl (820) hinweisen,
ein gemeinsames Zellenfeld (1410) mit gemeinsamen Systeminformationen für eine erste Zelle (510) und eine zweite Zelle (520) des Kommunikationssystems (100), und
ein erstes zellenspezifisches Feld (1420) mit ersten zellenspezifischen Systeminformationen, die auf die erste Zelle hinweisen, wobei das erste zellenspezifische Feld das gemeinsame Feld (910, 1430) und das erste strahlenspezifische Feld (920, 1440) umfasst; und
Einsetzen (1630) der gemeinsamen Systeminformationen und der ersten strahlenspezifischen Systeminformationen des Systeminformationsblocks (900, 1400) zum Erlangen von Zugang zum Kommunikationssystem (100), wobei:
der Systeminformationsblock (900, 1400) eine hierarchische Architektur für Zellen und entsprechende Strahlen ermöglicht.

## Revendications

1. Nœud d'accès radio (120, 300, 810) dans un système de communication (100) incluant un premier faisceau (820) et un deuxième faisceau (830), comprenant :
une circuiterie de traitement (310), configurée pour :
construire un bloc d'informations de système (900, 1400) pour ledit premier faisceau (820), incluant :
un champ commun (910, 1430) ayant des informations de système communes associées audit premier faisceau (820) et audit deuxième faisceau (830),
un champ spécifique au premier faisceau (920, 1440) ayant des informations de système spécifiques au premier faisceau indexées audit premier faisceau (820),
un champ de cellule commun (1410) ayant des informations de système communes pour une première cellule (510) et une deuxième cellule (520) dudit système de communication (100), et
un champ spécifique à la première cellule (1420) ayant des informations de système spécifiques à la première cellule indexées à la première cellule, dans lequel le champ spécifique à la première cellule inclut le champ commun (910, 1430) et le champ spécifique au premier faisceau (920, 1440) ; et
transmettre ledit bloc d'informations de système (900, 1400) à un équipement d'utilisateur (110, 200) pour accéder audit système de communication (100), dans lequel :
le bloc d'informations de système (900, 1400) facilite une architecture hiérarchique pour des cellules et des faisceaux correspondants.

2. Appareil (120, 300, 810) selon la revendication 1, dans lequel ledit bloc d'informations de système (900) comprend un champ spécifique au deuxième faisceau (930) ayant des informations de système spécifiques au deuxième faisceau indexées audit deuxième faisceau (830).

3. Appareil (120, 300, 810) selon la revendication 2, dans lequel lesdites informations de système spécifiques au premier faisceau associées audit premier faisceau (820) comprennent des informations pour accéder à une première cellule (510) dudit système de communication (100), et lesdites informations de système spécifiques au deuxième faisceau associées audit deuxième faisceau (830) comprennent des informations pour accéder à une deuxième cellule (520) dudit système de communication (100).

4. Appareil (120, 300, 810) selon la revendication 2, dans lequel lesdites informations de système spécifiques au premier faisceau associées audit premier faisceau (820) comprennent des informations pour accéder à une première cellule (510) dudit système de communication (100), et lesdites informations de système spécifiques au deuxième faisceau associées audit deuxième faisceau (830) comprennent des informations pour accéder à ladite première cellule (510) dudit système de communication (100).

5. Appareil (120, 300, 810) selon la revendication 1, dans lequel lesdites informations de système communes incluent des informations de configuration de canal d'accès aléatoire physique (PRACH) communes pour ledit premier faisceau (820) et ledit deuxième faisceau (830), et lesdites informations de système spécifiques au premier faisceau incluent des informations de configuration PRACH spécifiques au premier faisceau spécifiques audit premier faisceau (820).

6. Appareil (120, 300, 810) selon la revendication 5, dans lequel lesdites informations de configuration PRACH communes et lesdites informations de configuration PRACH spécifiques au premier faisceau incluent des paramètres de timing et/ou des paramètres de préambule PRACH.

7. Appareil (120, 300, 810) selon la revendication 1, dans lequel lesdites informations de système spécifiques au premier faisceau sont indexées audit premier faisceau (820) par un premier indice SI spécifique au premier faisceau (Index₁).

8. Appareil (120, 300, 810, 1310) selon la revendication 1, dans lequel ledit bloc d'informations de système (900, 1400) comprend un champ spécifique à la deuxième cellule (1460) ayant des informations spécifiques à la deuxième cellule pour une deuxième cellule (520) dudit système de communication (100).

9. Procédé (1500) réalisé par un nœud d'accès radio (120, 300, 810) dans un système de communication (100) incluant un premier faisceau (820) et un deuxième faisceau (830), comprenant :
la construction (1520) d'un bloc d'informations de système (900, 1400) pour ledit premier faisceau (820), incluant :
un champ commun (910, 1430) ayant des informations de système communes associées audit premier faisceau (820) et audit deuxième faisceau (830),
un champ spécifique au premier faisceau (920, 1440) ayant des informations de système spécifiques au premier faisceau indexées audit premier faisceau (820),
un champ de cellule commun (1410) ayant des informations de système communes pour une première cellule (510) et une deuxième cellule (520) dudit système de communication (100), et
un champ spécifique à la première cellule (1420) ayant des informations de système spécifiques à la première cellule indexées à la première cellule, dans lequel le champ spécifique à la première cellule inclut le champ commun (910, 1430) et le champ spécifique au premier faisceau (920, 1440) ; et
la transmission (1530) dudit bloc d'informations de système (900, 1400) à un équipement d'utilisateur (110, 200) pour accéder audit système de communication (100), dans lequel :
le bloc d'informations de système (900, 1400) facilite une architecture hiérarchique pour des cellules et des faisceaux correspondants.

10. Equipement d'utilisateur (110, 200) dans un système de communication (100) incluant un premier faisceau (820) et un deuxième faisceau (830), comprenant :
une circuiterie de traitement (210), configurée pour :
recevoir un bloc d'informations de système (900, 1400) pour ledit premier faisceau (820), incluant :
un champ commun (910, 1430) ayant des informations de système communes associées audit premier faisceau (820) et audit deuxième faisceau (830),
un champ spécifique au premier faisceau (920, 1440) ayant des informations de système spécifiques au premier faisceau indexées audit premier faisceau (820),
un champ de cellule commun (1410) ayant des informations de système communes pour une première cellule (510) et une deuxième cellule (520) dudit système de communication (100), et
un champ spécifique à la première cellule (1420) ayant des informations de système spécifiques à la première cellule indexées à la première cellule, dans lequel le champ spécifique à la première cellule inclut le champ commun (910, 1430) et le champ spécifique au premier faisceau (920, 1440) ; et
employer lesdites informations de système communes et lesdites informations de système spécifiques au premier faisceau dudit bloc d'informations de système (900, 1400) pour accéder audit système de communication (100), dans lequel :
le bloc d'informations de système (900, 1400) facilite une architecture hiérarchique pour des cellules et des faisceaux correspondants.

11. Procédé (1600) effectué par un équipement d'utilisateur (110, 200) dans un système de communication (100) incluant un premier faisceau (820) et un deuxième faisceau (830), comprenant :
la réception (1620) d'un bloc d'informations de système (900, 1400) pour ledit premier faisceau (820), incluant :
un champ commun (910, 1430) ayant des informations de système communes associées audit premier faisceau (820) et audit deuxième faisceau (830),
un champ spécifique au premier faisceau (920, 1440) ayant des informations de système spécifiques au premier faisceau indexées audit premier faisceau (820),
un champ de cellule commun (1410) ayant des informations de système communes pour une première cellule (510) et une deuxième cellule (520) dudit système de communication (100), et
un champ spécifique à la première cellule (1420) ayant des informations de système spécifiques à la première cellule indexées à la première cellule, dans lequel le champ spécifique à la première cellule inclut le champ commun (910, 1430) et le champ spécifique au premier faisceau (920, 1440) ; et
l'emploi (1630) desdites informations de système communes et desdites informations de système spécifiques au premier faisceau dudit bloc d'informations de système (900, 1400) pour accéder audit système de communication (100), dans lequel :
le bloc d'informations de système (900, 1400) facilite une architecture hiérarchique pour des cellules et des faisceaux correspondants.
